# EUROPEAN PATENT APPLICATION

(11) **EP 3 764 444 A1**
(43) Date of publication of application: **13.01.2021**
(21) Application number: 19764640.9
(22) Date of filing: 15.02.2019
(51) Int. Cl.: H01M 4/90, H01M 4/86, H01M 4/88, H01M 8/124, H01M 8/12

(54) **ELECTROLYTE LAYER-ANODE COMPOSITE MEMBER FOR FUEL CELL, CELL STRUCTURE, FUEL CELL, AND METHOD FOR MANUFACTURING COMPOSITE MEMBER**

(30) Priority: 06.03.2018 JP 2018039520
(71) Applicant: SUMITOMO ELECTRIC INDUSTRIES, LTD., Osaka-shi, Osaka 541-0041 (JP)
(72) Inventor: HIRAIWA, Chihiro, Osaka-shi, Osaka 541-0041 (JP); MAJIMA, Masatoshi, Osaka-shi, Osaka 541-0041 (JP); HIGASHINO, Takahiro, Osaka-shi, Osaka 541-0041 (JP); MIZUHARA, Naho, Osaka-shi, Osaka 541-0041 (JP); TAWARAYAMA, Hiromasa, Osaka-shi, Osaka 541-0041 (JP)
(74) Representative: Boult Wade Tennant LLP
(86) International application number: PCT/JP2019/005486
(87) International publication number: WO 2019/171903

(57) **Abstract**

Provided is an electrolyte layer-anode composite member for a fuel cell, the electrolyte layer-anode composite member including an anode and a solid electrolyte layer having ion conductivity, the anode being an aggregate of granules including a composite metal, the composite metal including a nickel element and an iron element, the granules including a plurality of pores, the composite metal accounting for 80% by mass or more of the anode, the anode having a bulk density of 75% or less of a real density of the composite metal. Also provided is a cell structure including the electrolyte layer-anode composite member for a fuel cell described above, and a cathode arranged on a side of the solid electrolyte layer.

## Description

### TECHNICAL FIELD

The present disclosure relates to an electrolyte layer-anode composite member for a fuel cell, a cell structure, a fuel cell, and a method for manufacturing a composite member. The present application claims priority to Japanese Patent Application No. 2018-039520 filed on March 6, 2018. The entire contents described in the Japanese patent application are incorporated herein by reference.

### BACKGROUND ART

An anode used for a fuel cell (SOFC) typically includes a nickel (Ni) component as a catalyst. Such an anode is generally formed by sintering a granular material including nickel oxide (NiO). A composite member made of a solid electrolyte layer and an anode (an electrolyte layer-anode composite member) is fabricated, for example, by shaping the anode using a material including NiO granules, then applying a solid electrolyte to a surface thereof, and performing co-sintering. Further, reduction treatment for reducing NiO to Ni is performed. This enhances the function of Ni as a catalyst, and also makes the anode porous, allowing passage of a fuel gas.

In the process of fabricating the electrolyte layer-anode composite member, particularly in the reduction treatment, a difference in contraction percentage arises between the solid electrolyte layer and the anode. As a result, peeling may occur between the solid electrolyte layer and the anode. The peeling is more likely to occur as the electrolyte layer-anode composite member has a larger diameter. The peeling between the solid electrolyte layer and the anode causes a significant decrease in power generation performance. Accordingly, WO 2011/074445 (PTL 1) teaches controlling a dimensional change rate of a cell during reduction of NiO.

### CITATION LIST

### PATENT LITERATURE

PTL 1: WO 2011/074445

### SUMMARY OF INVENTION

One aspect of the present disclosure relates to an electrolyte layer-anode composite member for a fuel cell, the electrolyte layer-anode composite member including an anode and a solid electrolyte layer having ion conductivity,
the anode being an aggregate of granules including a composite metal,
the composite metal including a nickel element and an iron element,
the granules including a plurality of pores,
the composite metal accounting for 80% by mass or more of the anode,
the anode having a bulk density of 75% or less of a real density of the composite metal.

Another aspect of the present disclosure relates to a cell structure including:
the electrolyte layer-anode composite member for a fuel cell described above; and
a cathode arranged on a side of the solid electrolyte layer.

Still another aspect of the present disclosure relates to a fuel cell including:
the cell structure described above;
an oxidizer channel for supplying an oxidizer to the cathode; and
a fuel channel for supplying a fuel to the anode.

Still another aspect of the present disclosure relates to a method for manufacturing an electrolyte layer-anode composite member for a fuel cell, the method including heat-treating a stacked body of a first layer including a composite oxide and a second layer including a metal oxide having ion conductivity, at 300°C to 600°C in a reducing gas atmosphere,
the composite oxide including a nickel element and an iron element.

Still another aspect of the present disclosure relates to a method for manufacturing an electrolyte layer-anode composite member for a fuel cell, the method including:
a first step of preparing an anode material including a composite oxide, and a solid electrolyte material including a metal oxide having ion conductivity;
a second step of forming a stacked body in which a first layer including the anode material and a second layer including the solid electrolyte material are stacked;
a third step of firing the stacked body; and
a fourth step of heat-treating the fired stacked body at 300°C to 600°C in a reducing gas atmosphere,
the composite oxide including a nickel element and an iron element.

### BRIEF DESCRIPTION OF DRAWINGS

Fig. 1 is a cross sectional view schematically showing a fuel cell in accordance with one embodiment of the present disclosure.
Fig. 2 is a scanning electron microscope photograph that captures a surface of an anode in a fabrication example 1.
Fig. 3 is a scanning electron microscope photograph that captures a surface of an anode in a fabrication example 2.
Fig. 4 is a scanning electron microscope photograph that captures a surface of an anode in a fabrication example 3.
Fig. 5 is a scanning electron microscope photograph that captures a surface of an anode in a fabrication example 4.
Fig. 6 is a scanning electron microscope photograph that captures a surface of an anode in a fabrication example 5.
Fig. 7 is a scanning electron microscope photograph that captures a surface of an anode in a comparative fabrication example 1.
Fig. 8 is a graph showing evaluation results of contraction percentages and porosities in fabrication examples 1 to 5 and comparative fabrication examples 1 to 2.

### DETAILED DESCRIPTION

### [Problem to be Solved by the Present Disclosure]

In recent years, anodes not including solid electrolytes have been developed. Such an anode has a high power generation performance and is excellent in impact resistance. On the other hand, it has a larger difference in contraction percentage from a solid electrolyte layer.

### [Advantageous Effect of the Present Disclosure]

According to the present disclosure, power generation performance of a fuel cell improves.

### [Description of Embodiment of the Present Disclosure]

First, the contents of an embodiment of the present disclosure will be enumerated.
(1) An electrolyte layer-anode composite member for a fuel cell in the present disclosure is an electrolyte layer-anode composite member for a fuel cell, the electrolyte layer-anode composite member including an anode and a solid electrolyte layer having ion conductivity,
   the anode being an aggregate of granules including a composite metal,
   the composite metal including a nickel element and an iron element,
   the granules including a plurality of pores,
   the composite metal accounting for 80% by mass or more of the anode,
   the anode having a bulk density of 75% or less of a real density of the composite metal. A fuel cell including the composite member exhibits an excellent power generation performance.
(2) Preferably, the pores have a diameter of 500 nm or less. This facilitates increasing porosity while decreasing resistance.
(3) A cell structure in the present disclosure includes:
   the electrolyte layer-anode composite member for a fuel cell described above; and
   a cathode arranged on a side of the solid electrolyte layer. A fuel cell including the cell structure exhibits an excellent power generation performance.
(4) A fuel cell in the present disclosure includes:
   the cell structure described above;
   a fuel channel for supplying a fuel to the anode; and
   an oxidizer channel for supplying an oxidizer to the cathode. The fuel cell is excellent in power generation performance.
(5) A method for manufacturing an electrolyte layer-anode composite member for a fuel cell in the present disclosure is a method for manufacturing an electrolyte layer-anode composite member for a fuel cell, including heat-treating a stacked body of a first layer including a composite oxide including a nickel element and an iron element and a second layer including a metal oxide having ion conductivity, at 300°C to 600°C in a reducing gas atmosphere,
   the composite oxide including the nickel element and the iron element.
In addition, (6) a method for manufacturing an electrolyte layer-anode composite member for a fuel cell in the present disclosure is a method for manufacturing an electrolyte layer-anode composite member for a fuel cell, including:
   a first step of preparing an anode material including a composite oxide including a nickel element and an iron element, and a solid electrolyte material including a metal oxide having ion conductivity;
   a second step of forming a stacked body in which a first layer including the anode material and a second layer including the solid electrolyte material are stacked;
   a third step of firing the stacked body; and
   a fourth step of heat-treating the fired stacked body at 300°C to 600°C in a reducing gas atmosphere,
   the composite oxide including the nickel element and the iron element. With these methods, an anode has a small contraction percentage, suppressing peeling between an electrolyte layer and the anode.
(7) Preferably, the composite oxide has a spinel crystal structure. Thereby, in reduction treatment, pores are formed in granules constituting the anode by priority, and expansion of gaps between the granules is more likely to be suppressed.
In addition, (8) preferably, the composite oxide is synthesized by an impregnation method including impregnating iron oxide with an aqueous solution of nickel nitrate. Thereby, in reduction treatment, pores are formed in granules constituting the anode by priority, and expansion of gaps between the granules is more likely to be suppressed.

### [Details of Embodiment of the Present Disclosure]

The embodiment of the present disclosure will be specifically described below. It should be noted that the present invention is not limited to the contents described below; rather, it is indicated by the scope of the claims, and is intended to encompass any modification within the meaning and scope equivalent to the scope of the claims.

In the present specification, an expression in the form of "X to Y" means upper and lower limits of a range (that is, X or more and Y or less), and when X is not accompanied by any unit and Y is alone accompanied by a unit, X has the same unit as Y.

### [Electrolyte Layer-Anode Composite Member for Fuel Cell]

An electrolyte layer-anode composite member for a fuel cell (hereinafter simply referred to as a "composite member") includes an anode and a solid electrolyte layer. The anode and the solid electrolyte layer are integrated by firing, for example.

In one aspect of the present disclosure, it can also be understood that the above composite member is a stacked body including an anode and a solid electrolyte layer stacked on the anode.

### (Anode)

The anode oxidizes a fuel such as hydrogen introduced through a channel (fuel channel) described later. On this occasion, a reaction to release protons and electrons (a reaction of oxidation of the fuel), or a reaction to oxidize the fuel and generate H₂O (or CO₂ when the fuel is a hydrocarbon such as CH₄) is performed. The anode preferably has a sheet-like shape.

The anode includes a composite metal including a nickel element (Ni) and an iron element (Fe) (hereinafter referred to as a "Ni-Fe composite metal"). The Ni-Fe composite metal accounts for 80% by mass or more of the anode. Thus, the anode is excellent in mechanical strength and has a high impact resistance. Further, since such an anode has a lower resistance, its energy loss during extraction of electric energy is small. In addition, since there is a large amount of Ni, which is a catalyst for decomposing hydrogen, at an interface between the anode and the solid electrolyte layer, performance of generating protons (H⁺) from a fuel gas (such as H₂) increases, and power generation performance improves. The ratio at which the Ni-Fe composite metal accounts for with respect to the anode is preferably 90% by mass or more, and is more preferably 95% by mass or more. The upper limit of the above ratio may be, although not particularly limited to, 100% by mass or less, or 99% by mass or less, for example. The anode may include a metal oxide described later.

The anode has a bulk density Db of 75% or less of a real density Dr of the composite metal. In other words, the anode has a high porosity (for example, 25% by volume or more). That is, the anode in accordance with the present embodiment has a low resistance as described above, and has a high porosity.

The bulk density Db (g/cm³) of the anode is calculated by dividing the mass (g) of the anode by an apparent volume (cm³) thereof. The real density Dr of the composite metal may vary depending on the composition. The real density Dr is calculated by adding all assumed densities of included metal elements, the assumed density of each metal element being obtained by multiplying the density of the metal element by the composition ratio thereof. For example, a composite metal that includes Ni and Fe at Ni/Fe=1/2 has a real density Dr of 8.391 g/cm³. The porosity (% by volume) is determined by (1 - the mass per apparent unit volume of the anode / the real density Dr of the composite metal) × 100. That is, the porosity (% by volume) is determined by {1 - (the bulk density Db of the anode / the real density Dr of the composite metal)} × 100.

The ratio of the bulk density Db of the anode to the real density Dr of the composite metal is preferably 70% or less, more preferably 65% or less, and further preferably 60% or less. However, when the diameter of pores formed in granules described later is small enough (for example, 150 nm or less), the above ratio may be 65% or more and 75% or less.

The Ni-Fe composite metal may be an alloy of Ni and Fe, or an intermetallic compound such as FeNi₃. In addition, its composition and crystal structure are not particularly limited, either. The Ni-Fe composite metal may have a crystal structure in which oxygen atoms are partially deficient from a composite oxide that includes Ni and Fe and has a spinel crystal structure. Granules of the Ni-Fe composite metal having such a crystal structure include many pores. The crystal structure can be analyzed by transmission electron microscopy-electron energy loss spectroscopy, for example.

The Ni-Fe composite metal having the above crystal structure can be obtained by reducing a composite oxide having a spinel crystal structure represented by NiFe₂O₃. In this reduction, pores are formed in the granules, in priority to formation of gaps between the granules.

The Ni-Fe composite metal is included in the anode as an aggregate of granules including the same. The granules are sintered, for example. The granules have a particle diameter Pa of 5 µm to 30 µm, for example. The particle diameter Pa of the granules can be calculated by taking an SEM photograph of a surface of the anode. Specifically, first, in the SEM photograph of the surface of the anode, a region R including ten or more granules is determined. The region R may be a region of 100 µm × 50 µm, for example. Ten granules are arbitrarily selected from the region R, and their respective maximum diameters are obtained. Here, the "maximum diameter" of a granule is a distance between two points on an outer circumference of the granule in the region R that is a maximum distance. An average value of these maximum diameters is defined as the particle diameter Pa of the granules.

The granules each include a plurality of pores. The pores are connected to form a communication hole. Accordingly, the fuel gas diffuses inside the anode mainly through the pores. It should be noted that gaps can also exist between the granules. In this case, the fuel gas can pass through these gaps. The width of the gaps is typically 1 µm or more.

The diameter of the above pores (a pore diameter Pₚ) is preferably 500 nm or less, more preferably 200 nm or less, and further preferably 150 nm or less. This facilitates increasing the porosity while decreasing the resistance. The pore diameter Pₚ can also be calculated from the above region R. Specifically, one arbitrary granule is selected from the region R, and diameters of ten arbitrary pores formed in the granule are obtained. An average value of these diameters is defined as the pore diameter Pₚ. The lower limit of the pore diameter may be, although not particularly limited to, 10 nm or more, or 30 nm or more, for example.

Further, a peak value in pore diameter distribution of the anode is preferably 500 nm or less. That is, the anode includes a cavity made of the pores formed in the granules, the cavity being larger than a cavity made of the gaps between the granules. Thereby, the resistance of the anode is maintained low, and the porosity thereof increases. The pore diameter distribution is measured by a gas absorption method using the BJH (Barrett-Joyner-Halenda) theory, for example.

When the anode has a sheet-like shape, a thickness Ta of the anode is not particularly limited. Inter alia, the thickness Ta is preferably 0.3 mm to 5 mm, and more preferably 0.5 mm to 4 mm. When the thickness Ta is within this range, the anode can support the solid electrolyte layer, and can suppress transport resistance of the fuel gas.

### (Solid Electrolyte Layer)

The solid electrolyte layer has ion conductivity. Such a solid electrolyte layer includes a metal oxide having ion conductivity. When the metal oxide has proton conductivity, the solid electrolyte layer moves protons generated at the anode to a cathode. When the metal oxide has oxygen ion conductivity, the solid electrolyte layer moves oxygen ions generated at the cathode to the anode. The solid electrolyte layer preferably has a sheet-like shape.

When the solid electrolyte layer has a sheet-like shape, a thickness Te of the solid electrolyte layer is preferably 3 µm to 50 µm, and more preferably 5 µm to 30 µm, from the viewpoint of achieving both ion conductivity and gas shut-off performance. A ratio Ta/Te between the thickness Te and the thickness of the thickness Ta of the anode may be 10 or more. The upper limit of Ta/Te may be 200 or less, for example. When the anode is thick enough with respect to the solid electrolyte layer in this manner, the solid electrolyte layer can be supported by the anode.

The solid electrolyte layer may be a stacked body of a plurality of solid electrolyte layers. In this case, each solid electrolyte layer may include the metal oxide different or identical in type.

As the metal oxide, for example, a known material used as a solid electrolyte of a fuel cell can be used. Inter alia, preferable examples of the metal oxide having proton conductivity include a compound having a perovskite crystal structure represented by ABO₃ (hereinafter referred to as a "perovskite oxide"). ABO₃ also includes a crystal structure of ABO_{3-δ}, where 8 represents an oxygen vacancy concentration. The perovskite crystal structure is a crystal structure similar to CaTiO₃. It should be noted that an element having an ionic radius larger than that in the B site enters the A site.

In addition, preferable examples of the metal oxide having oxygen ion conductivity include a compound including zirconium dioxide (hereinafter referred to as a "zirconium compound"), a compound including lanthanum and gallium (hereinafter referred to as "lanthanum gallate"), and a compound including cerium (hereinafter referred to as a "ceria compound").

A metal element that enters the A site of the perovskite oxide may be, although not particularly limited to, a group-2 element such as barium (Ba), calcium (Ca), or strontium (Sr), for example. Of these metal elements, one type may be used alone, or two or more types may be used in combination. Inter alia, Ba preferably enters the A site, from the viewpoint of proton conductivity.

Examples of a metal element that enters the B site include cerium (Ce), zirconium (Zr), yttrium (Y), and the like. Inter alia, the B site preferably includes at least one of Zr and Ce, from the viewpoint of proton conductivity. It should be noted that a part of the B site is replaced with a trivalent rare earth element other than cerium, such a dopant causes an oxygen defect, and the perovskite oxide exhibits proton conductivity.

Examples of the trivalent rare earth element (dopant) other than cerium include yttrium (Y), scandium (Sc), neodymium (Nd), samarium (Sm), gadolinium (Gd), holmium (Ho), erbium (Er), thulium (Tm), ytterbium (Yb), lutetium (Lu), and the like. Inter alia, it is preferable from the viewpoint of proton conductivity and chemical stability that Y or an element having an ionic radius smaller than that of Y occupies a part of the B site. Examples of the above element include Sc, Ho, Er, Tm, Yb, and Lu. In addition, the B site may include an element serving as dopant (such as indium (In), for example) other than the rare earth elements.

Examples of preferable perovskite oxides include: a compound represented by formula (1-1): Baₓ₁Ce_{1-y1}Y_{y1}O_{3-δ} (0.95≤x1≤1, 0<y1≤0.5, and 8 represents an oxygen vacancy concentration, BCY); a compound represented by formula (2-1): Baₓ₂Zr_{1-y2}Y_{y2}O_{3-δ} (0.95≤x2≤1, 0<y2≤0.5, and 8 represents an oxygen vacancy concentration, BZY); and a compound represented by formula (3-1): Baₓ₃Zr_{1-y3-y4}Ce_{y3}Y_{y4}O_{3-δ} (0.95≤x3≤1, 0<y3<1, 0<y4≤0.5, and 8 represents an oxygen vacancy concentration, BZCY), the compound being a solid solution of the above compounds, because they are particularly excellent in proton conductivity and exhibit a high power generation performance. Of these perovskite oxides, one type may be used alone, or two or more types may be used in combination. In this case, a part of Y that occupies the B site may be replaced with another element (e.g., another lanthanoid element), and a part of Ba that occupies the A site may be replaced with another group-2 element (Sr, Ca, or the like).

The zirconium compound includes at least one element selected from the group consisting of Ca, Sc, and Y for replacing and dissolving Zr, in addition to zirconium dioxide. Thereby, the zirconium compound exhibits oxygen ion conductivity. Preferable examples of the zirconium compound can include yttria stabilized zirconia (ZrO₂-Y₂O₃, YSZ), in terms of oxygen ion conductivity and cost. Examples of the lanthanum gallate can include (La_{0.9}Sr_{0.1})GaO_{3-δ} (LSG, δ represents an oxygen vacancy concentration), (La_{0.8}Sr_{0.2})(Ga_{0.8}Mg_{0.2})O_{3-δ} (LSGM, δ represents an oxygen vacancy concentration), and the like. Examples of the ceria compound can include gadolinium-doped ceria (GDC), samarium-doped ceria (SDC), yttrium-doped ceria (YDC), and lanthanum-doped ceria (LDC), and the like.

The solid electrolyte layer may include a component other than the metal oxide, but the content thereof is preferably small. For example, it is preferable that 99% by mass or more of a second layer is the metal oxide. The component other than the metal oxide is not particularly limited, and can include a compound known as a solid electrolyte (including a compound having no ion conductivity). The upper limit of the content ratio of the metal oxide in the solid electrolyte layer may be, although not particularly limited to, 100% by mass or less, or 99% by mass or less, for example.

### [Cell Structure]

A cell structure includes the composite member described above, and a cathode arranged on a side of the solid electrolyte layer. The composite member and the cathode are integrated by sintering, for example.

### (Cathode)

The cathode can adsorb, dissociate and ionize oxygen molecules. Further, the cathode has a porous structure. For example, when the metal oxide has proton conductivity, a reaction between protons conducted through the solid electrolyte layer and oxide ions (a reaction of oxygen reduction) occurs at the cathode. The oxide ions are generated by dissociation of an oxidizer (oxygen) introduced through an oxide channel described later. The cathode preferably has a sheet-like shape.

As a material for the cathode, for example, a known material used for cathodes of fuel cells and gas decomposition apparatuses can be used. The material for the cathode is a compound having a perovskite structure, for example. Specifically, examples of such a compound include lanthanum strontium cobalt ferrite (LSCF, La₁₋ₐSraCo_{1-b}FebO_{3-δ}, 0<a<1, 0<b<1, and δ represents an oxygen vacancy concentration), lanthanum strontium manganite (LSM, La_{1-c}Sr_{c}MnO_{3-δ}, 0<c<1, and δ represents an oxygen vacancy concentration), lanthanum strontium cobaltite (LSC, La_{1-d}Sr_{d}CoO_{3-δ}, 0<d<1, and δ represents an oxygen vacancy concentration), samarium strontium cobaltite (SSC, Sm₁₋ₑSrₑCoO_{3-δ}, 0<e<1, and δ represents an oxygen vacancy concentration), and the like.

The cathode may include a catalyst such as Ag, because it facilitates a reaction between protons and the oxidizer. When the cathode includes a catalyst, the cathode can be formed by mixing and sintering the catalyst and the material described above. In addition, the thickness of the cathode may be, although not particularly limited to, about 10 µm to 30 µm.

Here, when a gas including a gaseous body that generates hydrogen through decomposition, such as ammonia, methane (CH₄), and propane, is introduced to the anode, a reaction of decomposition of these gases occurs and hydrogen is generated at the anode. That is, the cell structure has gas decomposition performance, and can be used for a gas decomposition apparatus. It should be noted that, when a solid may be generated after the gas decomposition as in the case of a carbon-containing gas (such as CH4), a metal oxide having oxygen ion conductivity is preferably used for the anode.

For example, when ammonia is decomposed using a metal oxide having proton conductivity, hydrogen generated by the decomposition of ammonia is oxidized by the anode, and protons are generated. The generated protons pass through the solid electrolyte layer and move to the cathode. On the other hand, N₂ simultaneously generated by the decomposition of ammonia is exhausted as an exhaust gas through a fuel gas outlet described later. The anode may include a catalyst having a function of decomposing the above gas. Examples of the catalyst having a function of decomposing the gas such as ammonia include a compound including at least one catalyst component selected from the group consisting of Fe, Co, Ti, Mo, W, Mn, Ru, and Cu.

### [Fuel Cell]

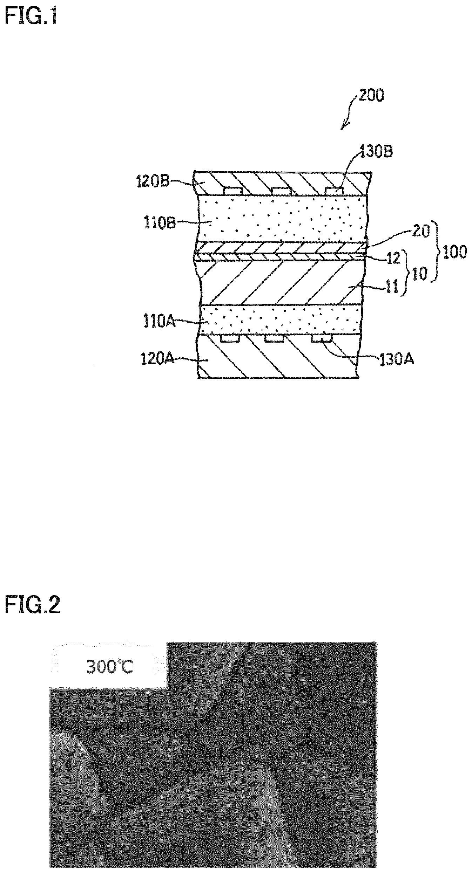

Fig. 1 schematically shows a cross section of a structure of a fuel cell 200.

Fuel cell 200 has a cell structure 100 including a composite member 10 and a cathode 20, a fuel channel 130A for supplying a fuel to an anode 11, and an oxidizer channel 130B for supplying an oxidizer to cathode 20.

Fuel channel 130A has a fuel gas inlet through which a fuel gas flows in, and a fuel gas outlet through which an unused fuel and H₂O (or CO₂ when the fuel is a hydrocarbon such as CH₄) generated by the reaction are exhausted (both not shown). Oxidizer channel 130B has an oxidizer inlet through which the oxidizer flows in, and an oxidizer outlet through which water generated by the reaction, an unused oxidizer, and the like are exhausted (both not shown). Examples of the oxidizer include an oxygen-containing gas.

When a metal oxide included in a solid electrolyte layer 12 has oxygen ion conductivity, fuel cell 200 can operate in a temperature range of 800°C or less. When the metal oxide included in solid electrolyte layer 12 has proton conductivity, fuel cell 200 can operate in a temperature range of 700°C or less. The operating temperature of fuel cell 200 is preferably within a medium temperature range of about 400°C to 600°C.

### (Separators)

Fuel channel 130A may be formed in a separator 120A arranged on the outside of anode 11, for example. Similarly, oxidizer channel 130B may be formed in a separator 120B arranged on the outside of cathode 20, for example.

That is, it can be understood that fuel cell 200 has:
cell structure 100 including composite member 10 and cathode 20;
separator 120A arranged on the outside of anode 11; and
separator 120B arranged on the outside of cathode 20, wherein
fuel channel 130A for supplying the fuel to anode 11 is formed in separator 120A arranged on the outside of anode 11, and
oxidizer channel 130B for supplying the oxidizer to cathode 20 is formed in separator 120B arranged on the outside of cathode 20.

When fuel cell 200 is constituted by stacking a plurality of cell structures 100, for example, cell structure 100, the separators (120A, 120B), and current collectors (110A, 110B) described later are stacked as one unit. The plurality of cell structures 100 may be connected in series by a separator including gas channels (an oxidizer channel and a fuel channel) on both sides thereof, for example.

Examples of a material for separators 120A, 120B can include heat-resistant alloys such as stainless steel, a nickel-based alloy, and a chromium-based alloy, in terms of electrical conductivity and heat resistance. Inter alia, stainless steel is preferable because it is inexpensive. When the operating temperature of fuel cell 200 is about 400°C to 600°C, stainless steel can be used as the material for the separators.

### (Current Collectors)

Fuel cell 200 may further include current collectors. For example, fuel cell 200 may include an anode-side current collector 110A arranged between anode 11 and separator 120A, and a cathode-side current collector 110B arranged between cathode 20 and separator 120B. Anode-side current collector 110A has a function of supplying the fuel gas introduced through fuel channel 130A to anode 11 in a diffusing manner, in addition to a current collecting function. Cathode-side current collector 110B has a function of supplying an oxidizer gas introduced through oxidizer channel 130B to cathode 20 in a diffusing manner, in addition to a current collecting function. Accordingly, each current collector is preferably a structure having air permeability.

Examples of the structure used for each current collector include a metal porous body, a metal mesh, a punching metal, an expanded metal, and the like including platinum, silver, a silver alloy, Ni, a Ni alloy, or the like. Inter alia, the structure used for each current collector is preferably a metal porous body, in terms of lightweight properties and air permeability. In particular, the structure used for each current collector is preferably a metal porous body having a three-dimensional network structure. The three-dimensional network structure refers to a structure in which rodlike or fibrous metals constituting the metal porous body are three-dimensionally connected with one another and form a network. Examples of the three-dimensional network structure include a sponge-like structure and a nonwoven fabric-like structure.

The metal porous body can be formed, for example, by coating a resin porous body having continuous gaps with a metal as described above. When an internal resin is removed after the metal coating treatment, a void is formed inside a framework of the metal porous body, and the framework has a hollow interior. As a commercially available metal porous body having such a structure, nickel "Celmet" (registered trademark) manufactured by Sumitomo Electric Industries, Ltd. or the like can be used.

### [Method for Manufacturing Composite Member]

Composite member 10 is manufactured, for example, by a method including a step of heat-treating a stacked body of a first layer including a composite oxide and a second layer including a metal oxide having ion conductivity, at 300°C to 600°C in a reducing gas atmosphere. The composite oxide includes a nickel element and an iron element. Through this step, pores are formed in the composite oxide serving as granules. This can suppress contraction of the first layer while increasing the porosity thereof. The first layer is a precursor layer of anode 11, and the second layer is a precursor layer of solid electrolyte layer 12.

The stacked body of the first layer including the composite oxide and the second layer including the metal oxide having ion conductivity is fabricated by a method including: a first step of preparing an anode material including the composite oxide, and a solid electrolyte material including the metal oxide having ion conductivity; a second step of forming the stacked body in which the first layer including the anode material and the second layer including the solid electrolyte material are stacked; and a third step of firing the stacked body. The composite oxide includes a nickel element and an iron element. The first to third steps and a step of heat-treating the stacked body at 300°C to 600°C in a reducing gas atmosphere (a fourth step) will be described in detail below.

### (First Step)

In the first step, an anode material and a solid electrolyte material are prepared. The anode material is a material for forming anode 11, and includes a composite oxide including a nickel element and an iron element. The solid electrolyte material is a material for forming solid electrolyte layer 12, and includes a metal oxide having ion conductivity.

Although the crystal structure of the composite oxide is not particularly limited, it is preferably a spinel crystal structure, because a change in the volume of the first layer in reduction treatment is small, and a contraction behavior is easily controlled. When the composite oxide has such a crystal structure, in the reduction treatment, pores are more likely to be formed in the granules, whereas expansion of gaps between the granules in the first layer is suppressed. That is, the porosity of the first layer increases, with little decrease in an apparent volume thereof (the first layer has an extremely small contraction percentage).

Although the method for synthesizing the composite oxide is not particularly limited either, the composite oxide is preferably synthesized by an impregnation method. In the composite oxide synthesized by the impregnation method, pores are particularly likely to be formed in the granules in the reduction treatment. In other words, when pores are formed in surfaces of the granules including the composite oxide included in the anode subjected to the reduction treatment, there is a high probability that the composite oxide is synthesized by the impregnation method.

The impregnation method is a method for synthesizing a desired oxide through a procedure described below. First, a precursor for forming an oxide including Ni is dissolved in a solvent such as water by heat treatment. Then, a carrier is impregnated with the solution to cause the carrier to carry the precursor. Thereafter, the carrier carrying the precursor is heat-treated to synthesize a desired oxide. For example, first, powder of iron oxide (carrier) is impregnated with an aqueous solution of nickel nitrate (precursor) to cause iron oxide to carry nickel nitrate. Thereafter, iron oxide carrying nickel nitrate is heat-treated, and thereby a composite oxide having a spinel crystal structure and including Ni and Fe can be obtained.

The content ratio of the composite oxide in the anode material may be within a range in which the ratio at which the Ni-Fe composite metal accounts for with respect to reduced anode 11 is 80% by mass or more.

An average particle diameter P₀ of the composite oxide is not particularly limited, and may be 1 µm to 50 µm, for example. The average particle diameter P₀ is calculated by the same method as that for particle diameter Pa of the granules, using an SEM photograph of a surface of the first layer.

The solid electrolyte material and the anode material preferably include a binder from the viewpoint of shapability. Examples of the binder include known materials used in manufacturing ceramic materials, e.g., polymer binders such as cellulose derivatives (cellulose ethers) such as ethyl cellulose, vinyl acetate resins (including saponified vinyl acetate resins such as polyvinyl alcohol), and acrylic resins; and waxes such as paraffin wax.

When the anode material is subjected to press forming, the amount of the binder included in the anode material may be, for example, 1 to 15 parts by mass (3 to 10 parts by mass in particular) relative to 100 parts by mass of the composite oxide. Otherwise, the amount of the binder may be, for example, 1 to 20 parts by mass (1.5 to 15 parts by mass in particular) relative to 100 parts by mass of the composite oxide. The amount of the binder included in the solid electrolyte material may be, for example, 1 to 20 parts by mass (1.5 to 15 parts by mass in particular) relative to 100 parts by mass of the metal oxide.

Each material may include a dispersion medium such as water, an organic solvent (e.g., hydrocarbons such as toluene (aromatic hydrocarbons); alcohols such as ethanol and isopropanol; and carbitols such as butyl carbitol acetate), as necessary. Each material may include a variety of types of additives, such as a surfactant, a deflocculant (such as polycarboxylic acid), and the like, as necessary.

### (Second Step)

In the second step, a first layer including the anode material and a precursor layer of the solid electrolyte layer including the solid electrolyte material (a second layer) are stacked to form a stacked body.

The method for forming each layer is not particularly limited, and may be selected as appropriate depending on the layer's desired thickness. For example, when a layer having a thickness of several hundred micrometers or more is formed, each material can be shaped by press forming, tape casting, or the like. When a layer having a thickness of several micrometers to several hundred micrometers is formed, each material can be shaped by an existing method such as screen printing, spray coating, spin coating, dip coating, or the like. The stacked body may be formed by combining these methods. The second layer is typically formed by screen printing, spray coating, spin coating, dip coating, or the like.

Specifically, first, the anode material is formed into a predetermined shape by press forming. This shaped body serves as the first layer. The predetermined shape is, for example, in the form of a pellet, a plate, a sheet, or the like. Prior to this shaping, the anode material may be granulated and then granules may be shaped. If necessary, the obtained granules may be disintegrated and then shaped.

Subsequently, the solid electrolyte material is applied to a surface of the shaped first layer, for example by screen printing, spray coating, spin coating, dip coating, or the like, to form the second layer. The stacked body is thus obtained.

Before the solid electrolyte material is applied to the first layer, a step of calcining the first layer may be performed. The calcination may be performed at a temperature lower than a temperature at which the anode material is sintered (e.g., 900°C to 1100°C). The calcination facilitates applying the solid electrolyte material.

### (Third Step)

In the third step, the obtained stacked body is fired. The firing is performed by heating the obtained stacked body in an oxygen-containing atmosphere to 1200°C to 1700°C, for example. The oxygen content in the firing atmosphere is not particularly limited. The firing may be performed for example in an air atmosphere (oxygen content: about 20% by volume) or in pure oxygen (oxygen content: 100% by volume). The firing can be performed at a normal pressure or a high pressure.

Before the stacked body is fired, a resin component such as a binder included in each material may be removed. That is, after the solid electrolyte material is applied to the first layer, the stacked body is heated in the air to a relatively low temperature of about 500°C to 700°C to remove a resin component included in each material. Thereafter, the above-described firing is performed.

In the third step, the anode material and the solid electrolyte material are cosintered. The first and second layers are thus formed to be integrated, and the stacked body is obtained.

After the third step and before the fourth step, a layer including a cathode material may be stacked on a side of the second layer of the stacked body, and may be fired at 800°C to 1100°C, for example, to form a cathode. The firing is performed in an oxygen-containing atmosphere similar the above.

The cathode material may include a binder, as with the anode material. In this case, the layer including the cathode material is stacked by applying the cathode material in the form of paste or slurry to a surface of the second layer. As the method for forming the layer including the cathode material, the same method as that for the second layer described above is indicated as an example.

### (Fourth Step)

The fourth step is a step of reducing at least a portion of the composite oxide included in the first layer of the stacked body. The reduction treatment is performed by heating the stacked body at 300°C to 600°C in a reducing gas atmosphere. The temperature condition for the reduction treatment is preferably 350°C to 500°C.

As described above, the ratio of the composite oxide to the first layer is high. However, when reduction is performed within the above temperature range, formation of pores in the granules occurs by priority. Thus, a change in the apparent volume of the first layer is small, and the contraction percentage thereof can be suppressed. For example, the first layer has a contraction percentage of 8% or less. On the other hand, sufficient pores can be formed in anode 11. For example, anode 11 obtained has a porosity of 25% by volume or more.

In addition, since the formation of pores in the granules occurs by priority, a change in the apparent volume of the granules themselves is also small. For example, the particle diameter Pa of the granules constituting anode 11 is 90% to 95% of the average particle diameter P₀ of the composite oxide included in the anode material.

The reduction treatment can be performed at a normal pressure or a high pressure. A typical reducing gas is hydrogen. Instead of hydrogen, for example, a hydrocarbon such as methane or propane may be used as a reducing gas. The reduction treatment may be performed before or after the stacked body is incorporated into a fuel cell.

### Examples

Hereinafter, the present invention will be described more specifically based on examples. It should be noted, however, that the following examples do not limit the present invention.

### [Fabrication Example 1]

An anode A was fabricated through the following procedure.

As an anode material, mixed powder including a spinel composite oxide including Ni and Fe synthesized by an impregnation method (NiFe₂O₃, average particle diameter P₀: 10 µm, 80% by volume) and a binder (an acrylic resin, 20% by volume) was prepared. Using the mixed powder, a circular sheet-like shaped body (a precursor of an anode) having a diameter of 140 mm and a thickness of 0.8 mm was obtained by uniaxial press forming.

Then, the obtained precursor of the anode was heated at 600°C for one hour in the air to remove the binder, and thereafter firing was performed at 1350°C for two hours in an oxygen atmosphere. Subsequently, the precursor of the anode was heated at 300°C for 5 hours in a hydrogen atmosphere to reduce the composite oxide to a Ni-Fe composite metal, and thus anode A was obtained. Fig. 2 shows a photograph that captures a surface of anode A using a scanning electron microscope (SEM). The ratio of the bulk density Db of anode A to the real density Dr of the Ni-Fe composite metal was 74%, and the particle diameter Pa of granules was 15 µm. In addition, the pore diameter Pₚ formed in the granules was 120 nm.

### (1) Evaluation of Contraction Percentage

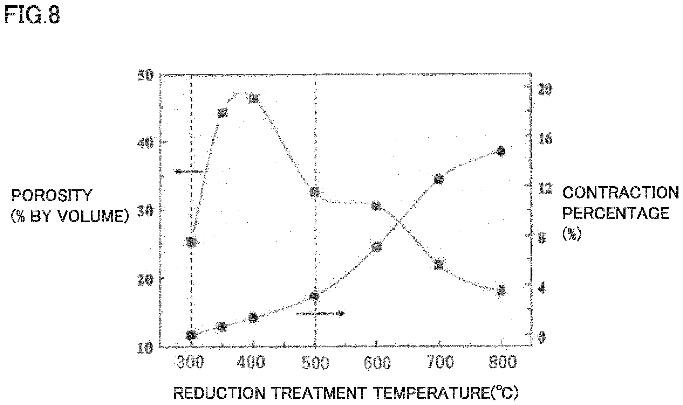

An outer diameter of the obtained anode after the reduction treatment was measured. The outer diameter was defined as a diameter obtained when the anode was placed on a horizontal plane and viewed in the direction of the normal to the horizontal plane. This outer diameter was compared with a diameter of a precursor A of the anode after the firing and before the reduction treatment. Fig. 8 shows the result. The contraction percentage was indicated by a circular marker.

### (2) Evaluation of Porosity

The porosity (% by volume) of the anode was determined by (1 - the mass per apparent unit volume of the anode / the real density Dr of the composite metal) × 100. Fig. 8 shows the result. The porosity was indicated by a square marker.

### [Fabrication Example 2]

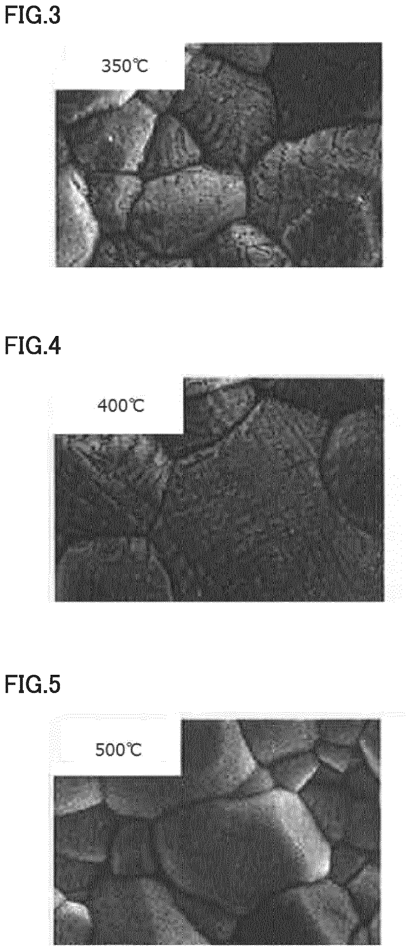

An anode B was fabricated and evaluated in the same manner as in fabrication example 1, except that the reduction treatment was performed at 350°C. Fig. 8 shows the result. In addition, Fig. 3 shows a photograph that captures a surface of anode B using the SEM. The ratio of the bulk density Db of anode B to the real density Dr of the Ni-Fe composite metal was 56%, and the particle diameter Pa of granules was 10 µm. In addition, the pore diameter Pₚ formed in the granules was 130 nm.

### [Fabrication Example 3]

An anode C was fabricated and evaluated in the same manner as in fabrication example 1, except that the reduction treatment was performed at 400°C. Fig. 8 shows the result. In addition, Fig. 4 shows a photograph that captures a surface of anode C using the SEM. The ratio of the bulk density Db of anode C to the real density Dr of the Ni-Fe composite metal was 54%, and the particle diameter Pa of granules was 24 µm. In addition, the pore diameter Pₚ formed in the granules was 105 nm.

### [Fabrication Example 4]

An anode D was fabricated and evaluated in the same manner as in fabrication example 1, except that the reduction treatment was performed at 500°C. Fig. 8 shows the result. In addition, Fig. 5 shows a photograph that captures a surface of anode D using the SEM. The ratio of the bulk density Db of anode D to the real density Dr of the Ni-Fe composite metal was 67%, and the particle diameter Pa of granules was 15 µm. In addition, the pore diameter Pₚ formed in the granules was 100 nm.

### [Fabrication Example 5]

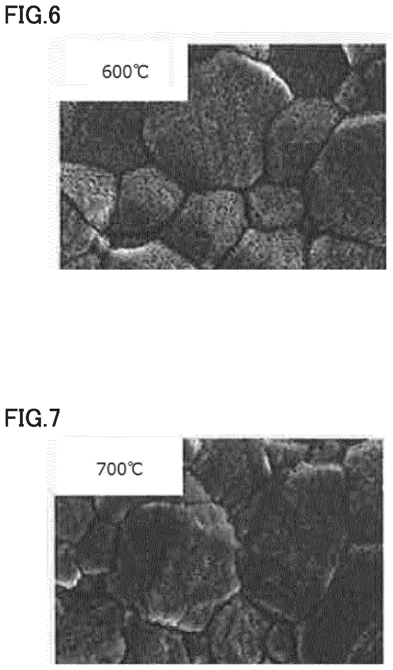

An anode E was fabricated and evaluated in the same manner as in fabrication example 1, except that the reduction treatment was performed at 600°C. Fig. 8 shows the result. In addition, Fig. 6 shows a photograph that captures a surface of anode E using the SEM. The ratio of the bulk density Db of anode E to the real density Dr of the Ni-Fe composite metal was 68%, and the particle diameter Pa of granules was 11 µm. In addition, the pore diameter Pₚ formed in the granules was 200 nm.

### [Comparative Fabrication Example 1]

An anode a was fabricated and evaluated in the same manner as in fabrication example 1, except that the reduction treatment was performed at 700°C. Fig. 8 shows the result. In addition, Fig. 7 shows a photograph that captures a surface of anode a using the SEM. The ratio of the bulk density Db of anode a to the real density Dr of the Ni-Fe composite metal was 84%, and the particle diameter Pa of granules was 21 µm. In addition, the pore diameter Pₚ formed in the granules was 850 nm.

### [Comparative Fabrication Example 2]

An anode b was fabricated and evaluated in the same manner as in fabrication example 1, except that the reduction treatment was performed at 800°C. Fig. 8 shows the result.

Anodes A to E fabricated in fabrication examples 1 to 5 had a porosity of 25% by volume or more, and a contraction percentage of 8% or less. In addition, in anodes A to E, many pores were formed in the granules, whereas gaps between the granules were small. Further, the granules in anodes A to E had a smooth external appearance. In contrast, anodes a and b fabricated in comparative fabrication examples 1 and 2 had a porosity of less than 25% by volume, and a contraction percentage of far more than 8%. In addition, the granules in anode a had a distorted external appearance, and the particle diameter Pa thereof was smaller than the average particle diameter of the composite oxide as a source material. The same applied to anode b.

### [Example 1]

A fuel cell was fabricated through the following procedure.

### (1) Preparation of Solid Electrolyte Material

As a metal oxide, BCY powder that was a solid solution of BaCeO₃ and Y₂O₃ and had a perovskite crystal structure was prepared. The ratio (atomic composition ratio) between Ce and Y in BCY was 80:20. The chemical formula of the BCY powder was presumed as BaCe_{0.8}Y_{0.2}O_{2.9}. As a solid electrolyte material, paste including the BCY powder (35% by volume), an organic solvent (butylcarbitol acetate, 40% by volume), and a binder (cellulosic resin, 25% by volume) was prepared.

### (2) Fabrication of Precursor of Composite Member

The above paste was applied to a surface of a precursor of an anode (a first layer) obtained in the same manner as in fabrication example 1, by screen printing, to form a second layer, and thereby a stacked body was obtained. The application thickness was about 15 µm. Then, the obtained stacked body was heated at 600°C for one hour in the air to remove the binder and the organic solvent, and thereafter, firing was performed at 1350°C for two hours in an oxygen atmosphere.

### (3) Fabrication of Precursor of Cell Structure

LSCF paste prepared by mixing powder of LSCF (La_{0.6}Sr_{0.4}Co_{0.2}Fe_{0.8}O_{3-δ}) (δ represents an oxygen vacancy concentration) and the above organic solvent, the paste serving as a material for a cathode, was screen-printed on a surface of a solid electrolyte layer of the stacked body fired in (2), and subsequently, firing was performed at 1000°C for two hours. The cathode had a thickness of 10 µm.

### (4) Fabrication of Fuel Cell

A current collector made of a nickel porous body (Celmet manufactured by Sumitomo Electric Industries, Ltd., thickness: 1 mm, porosity: 95% by volume) was stacked on each surface of a precursor of a cell structure obtained above. Further, a separator made of stainless steel having a channel was stacked on each current collector to fabricate a fuel cell A shown in Fig. 1. One end portion of a lead wire was joined to each current collector. The other end portion of the lead wire was drawn out of the fuel cell, and was connected to a measuring instrument to allow measurement of a current value and a voltage value between the lead wires.

### (5) Reduction Treatment

Subsequently, the operating temperature (reduction temperature) of fuel cell A was set to 300°C, and hydrogen as a fuel gas was supplied to the first layer at 100 cm³/minute and the air was supplied to the cathode at 300 cm³/minute, to reduce a composite oxide included in the first layer. Thereby, a composite member A and a cell structure A were obtained. Breakage such as a crack or peeling was not observed in cell structure A.

### (6) Evaluation of Power Generation Performance

Subsequently, the operating temperature was raised to 600°C to determine a maximum output density of fuel cell A. Table 1 shows the result.

### [Example 2]

A composite member B, a cell structure B, and a fuel cell B were fabricated and evaluated in the same manner as in example 1, except that the reduction treatment was performed at 350°C. Table 1 shows the result. Breakage such as a crack or peeling was not observed in cell structure B.

### [Example 3]

A composite member C, a cell structure C, and a fuel cell C were fabricated and evaluated in the same manner as in example 1, except that the reduction treatment was performed at 400°C. Table 1 shows the result. Breakage such as a crack or peeling was not observed in cell structure C.

### [Example 4]

A composite member D, a cell structure D, and a fuel cell D were fabricated and evaluated in the same manner as in example 1, except that the reduction treatment was performed at 500°C. Table 1 shows the result. Breakage such as a crack or peeling was not observed in cell structure D.

### [Example 5]

A composite member E, a cell structure E, and a fuel cell E were fabricated and evaluated in the same manner as in example 1, except that the reduction treatment was performed at 600°C. Table 1 shows the result. Breakage such as a crack or peeling was not observed in cell structure E.

### [Comparative Example 1]

A composite member a, a cell structure a, and a fuel cell a were fabricated and evaluated in the same manner as in example 1, except that the reduction treatment was performed at 700°C. Table 1 shows the result. Peeling was observed between the anode and the solid electrolyte layer in cell structure a.

**[Table 1]**

| Fuel Cell | A | B | C | D | E | a |
|---|---|---|---|---|---|---|
| Maximum Output Density (mW/cm²) | 125 | 171 | 202 | 215 | 189 | 75 |

### REFERENCE SIGNS LIST

10: composite member; 11: anode; 12: solid electrolyte layer; 20: cathode; 100: cell structure; 110A, 110B: current collector; 120A, 120B: separator; 130A: fuel channel; 130B: oxidizer channel; 200: fuel cell.

## Claims

1. An electrolyte layer-anode composite member for a fuel cell, the electrolyte layer-anode composite member comprising:
an anode; and
a solid electrolyte layer having ion conductivity,
the anode being an aggregate of granules including a composite metal,
the composite metal including a nickel element and an iron element,
the granules including a plurality of pores,
the composite metal accounting for 80% by mass or more of the anode,
the anode having a bulk density of 75% or less of a real density of the composite metal.

2. The electrolyte layer-anode composite member for a fuel cell according to claim 1, wherein the pores have a diameter of 500 nm or less.

3. A cell structure comprising:
the electrolyte layer-anode composite member for a fuel cell according to claim 1; and
a cathode arranged on a side of the solid electrolyte layer.

4. A fuel cell comprising:
the cell structure according to claim 3;
a fuel channel for supplying a fuel to the anode; and
an oxidizer channel for supplying an oxidizer to the cathode.

5. A method for manufacturing an electrolyte layer-anode composite member for a fuel cell, the method comprising heat-treating a stacked body of a first layer including a composite oxide and a second layer including a metal oxide having ion conductivity, at 300°C to 600°C in a reducing gas atmosphere,
the composite oxide including a nickel element and an iron element.

6. A method for manufacturing an electrolyte layer-anode composite member for a fuel cell, the method comprising:
a first step of preparing an anode material including a composite oxide, and a solid electrolyte material including a metal oxide having ion conductivity;
a second step of forming a stacked body in which a first layer including the anode material and a second layer including the solid electrolyte material are stacked;
a third step of firing the stacked body; and
a fourth step of heat-treating the fired stacked body at 300°C to 600°C in a reducing gas atmosphere,
the composite oxide including a nickel element and an iron element.

7. The method for manufacturing an electrolyte layer-anode composite member for a fuel cell according to claim 5 or 6, wherein the composite oxide has a spinel crystal structure.

8. The method for manufacturing an electrolyte layer-anode composite member for a fuel cell according to any one of claims 5 to 7, wherein the composite oxide is synthesized by an impregnation method including impregnating iron oxide with an aqueous solution of nickel nitrate.
